# EUROPEAN PATENT APPLICATION

(11) **EP 4 527 797 A1**
(43) Date of publication of application: **26.03.2025**
(21) Application number: 23820055.4
(22) Date of filing: 02.06.2023
(51) Int. Cl.: C01B 25/30, C22B 3/42, C22B 7/00

(54) **METHOD FOR PRODUCING HIGH-PURITY LITHIUM PHOSPHATE FROM WASTE SAGGAR**

(30) Priority: 09.06.2022 KR 20220070189
(71) Applicant: Koreaseparation Co., Ltd., Donghae-si Gangwon-do 25799 (KR)
(72) Inventor: SONG, Won Hong, Seoul 04780 (KR)
(74) Representative: BCKIP Part mbB
(86) International application number: PCT/KR2023/007605
(87) International publication number: WO 2023/239119

(57) **Abstract**

The present invention provides an optimized method for recovering high-purity lithium phosphate from a lithium-containing composite oxide deposited on an eroded surface of a waste sagger discarded. Therefore, when the method for producing high-purity lithium phosphate from a waste sagger of the present invention is used, it is expected not only to be able to produce high-purity lithium phosphate that can be used for manufacturing lithium secondary batteries by recycling a discarded waste sagger, but also to be able to recycle a positive electrode active material, iron oxide, alumina, silicate, and calcium carbonate obtained as by-products during the production process of the lithium phosphate.

## Description

### TECHNICAL FIELD

The present invention relates to a method for producing high-purity lithium phosphate from a waste sagger. Specifically, the present invention relates to a method for producing high-purity lithium phosphate having a purity of 99.9% or greater by crushing and dissolving a waste sagger, and then performing solid-liquid separation, anion exchange, wet magnetic separation, carbonation, and lithium phosphate precipitation reactions.

### BACKGROUND ART

A positive electrode active material of a lithium secondary battery is prepared by being fired at a high temperature in a sagger made of ceramic oxide containing SiO₂, Al₂O₃, and MgO as main components. Since the sagger is used for repeated high-temperature firing of a lithium-containing composite oxide, which is a raw material of the positive electrode active material, the surface of the sagger is eroded over time, and lithium hydroxide, lithium carbonate, and the positive electrode active material are deposited on the eroded portion. Ultimately, the sagger with the surface eroded by the lithium hydroxide, the lithium carbonate, or the like is discarded due to the deterioration in thermal durability. The amount of waste saggers generated domestically is known to be about 9,000 tons per year, but as the demand for lithium secondary batteries rapidly increases due to the popularization of mobile devices and electric vehicles, the amount of waste saggers generated is also expected to increase rapidly.

As described above, a sagger is used in the preparation of a positive electrode active material and eroded by a lithium-containing composite oxide during a high-temperature firing process, and thus, loses its function. Therefore, if a lithium-containing composite oxide deposited on an eroded portion can be recovered in the form of high-purity lithium sulfate, lithium carbonate, or lithium phosphate from a waste sagger discarded due to the deterioration in thermal durability caused by repeated high-temperature firing of the lithium-containing composite oxide, it is expected that the recovered lithium-containing composite oxide is recycled in the production of lithium-ion secondary batteries and reduce production costs. However, there is no known method for recovering a high-purity lithium compound from a waste sagger.

The patent literature and references cited herein are incorporated by reference herein to the same extent that each document is individually and clearly identified by reference.

### DISCLOSURE OF THE INVENTION

### TECHNICAL PROBLEM

An object of the present invention is to provide a method for maximizing the recovery rate of lithium by recovering, as lithium phosphate which is poorly soluble, a trace amount of lithium contained in wastewater generated in a process of recovering a lithium compound from a waste sagger discarded after being used for high-temperature firing when preparing a positive electrode active material for a lithium secondary battery.

Other objects and technical features of the present invention are presented in more detail by a detailed description of the invention, claims, and drawings below.

### TECHNICAL SOLUTION

The present invention provides a method for producing high-purity lithium phosphate from a waste sagger, the method including a first step of crushing a waste sagger to produce a waste sagger crushed material, a second step of adding an alkali leaching agent and water to the waste sagger crushed material and then allowing a reaction to occur therebetween to prepare a waste sagger crushed material dissolution reaction slurry, a third step of performing primary solid-liquid separation on the waste sagger crushed material dissolution reaction slurry, a fourth step of allowing a filtrate obtained in a liquid phase through the primary solid-liquid separation to flow through an anion exchange resin to perform an anion exchange reaction, a fifth step of performing a carbonation reaction on a flow-through of the anion exchange reaction to prepare a carbonation reaction liquid, a sixth step of performing secondary solid-liquid separation on the carbonation reaction liquid, a seventh step of performing reverse osmosis concentration on a filtrate obtained in a liquid phase through the secondary solid-liquid separation, an eighth step of performing a heating fractional precipitation reaction on a concentration liquid obtained through the reverse osmosis concentration, a ninth step of performing tertiary solid-liquid separation on a reaction liquid of the heating fractional precipitation reaction, a tenth step of performing a lithium phosphate precipitation reaction on a filtrate obtained in a liquid phase through the tertiary solid-liquid separation, and an eleventh step of performing quaternary solid-liquid separation on a reaction liquid of the lithium phosphate precipitation reaction to obtain high-purity lithium phosphate in a solid phase.

The waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes, and the anion exchange resin is an anion exchange resin prepared by allowing trimethyl ammonium or dimethyl ethanolamine to be adsorbed onto a styrene-based resin having a gel structure, wherein the anion exchange reaction is performed by allowing the filtrate obtained in a liquid phase through the primary solid-liquid separation to flow through an anion exchange tower filled with the anion exchange resin at a flow rate of 0.1 m/sec to 1 m/sec.

The carbonation reaction is performed by introducing the flow-through of the anion exchange reaction into a pressure reaction vessel (or a sealed container), injecting one selected from among carbon dioxide, carbonated water, and a lithium hydrogen carbonate aqueous solution to the flow-through to allow a reaction to occur therebetween until the pH reaches 7, and then letting the mixture to stay at a temperature of 80 °C to 100 °C for 20 minutes or more to complete the reaction, and the reverse osmosis concentration uses a batch-type reverse osmosis facility, and the upper limit of the working pressure of a pump is set to 20 kg/cm², and the filtrate obtained in a liquid phase through the secondary solid-liquid separation is concentrated until the concentration of lithium therein reaches 10,000 mg/ℓ to 20,000 mg/ℓ.

The heating fractional precipitation reaction is performed by heating the concentration liquid obtained through the reverse osmosis concentration to 80 °C to 100 °C for 20 minutes or more to precipitate lithium carbonate, and the lithium phosphate precipitation reaction is performed by introducing, to the filtrate obtained in a liquid phase through the tertiary solid-liquid separation, an soluble phosphate aqueous solution corresponding to an equivalent of 1 time to 1.1 times the equivalent of lithium ions dissolved in the filtrate, adjusting the pH to 12 or higher, and then allowing the mixture to stay at 80 °C to 100 °C for 20 minutes or longer to precipitate lithium phosphate.

The lithium phosphate produced by the production method of the present invention has a purity of 99.9% or greater.

### ADVANTAGEOUS EFFECTS

The present invention provides an optimized method for recovering, as poorly soluble lithium phosphate, lithium contained and discarded in wastewater generated in a process of recovering lithium from a lithium-containing composite oxide deposited on an erosion surface of a discarded waste sagger. Therefore, when the method for producing high-purity lithium phosphate from a waste sagger of the present invention is used, it is expected to maximize the recovery rate of lithium in a process of recovering lithium from a discarded waste sagger.

### BRIEF DESCRIPTION OF THE DRAWINGS

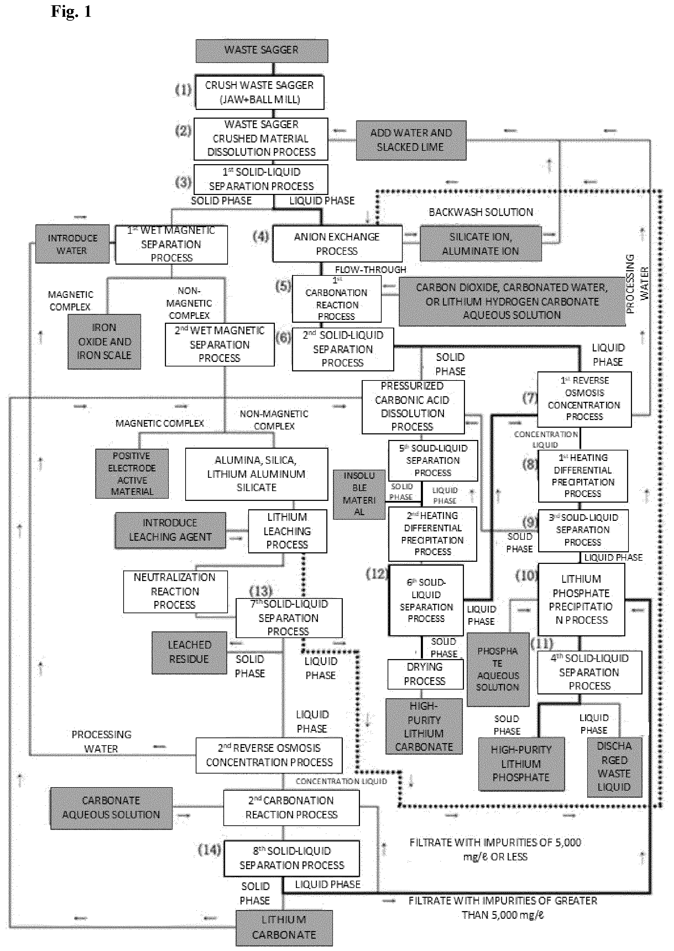

FIG. 1 schematically shows a method for producing high-purity lithium phosphate from a waste sagger of the present invention. The production method of FIG. 1 includes a process of introducing a liquid, which is obtained by solid-liquid separation after performing wet magnetic separation, lithium leaching, and a neutralization reaction, to an anion exchange process.

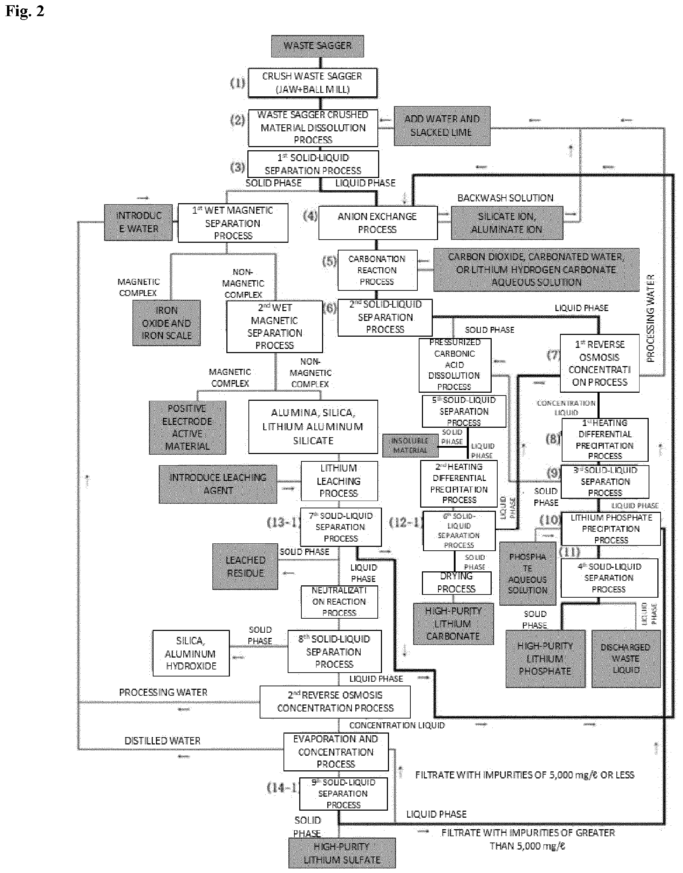

FIG. 2 schematically shows a method for producing high-purity lithium phosphate from a waste sagger of the present invention. The production method of FIG. 2 includes a process of introducing a liquid, obtained by solid-liquid separation after performing wet magnetic separation and lithium leaching but before a neutralization reaction, to an anion exchange process.

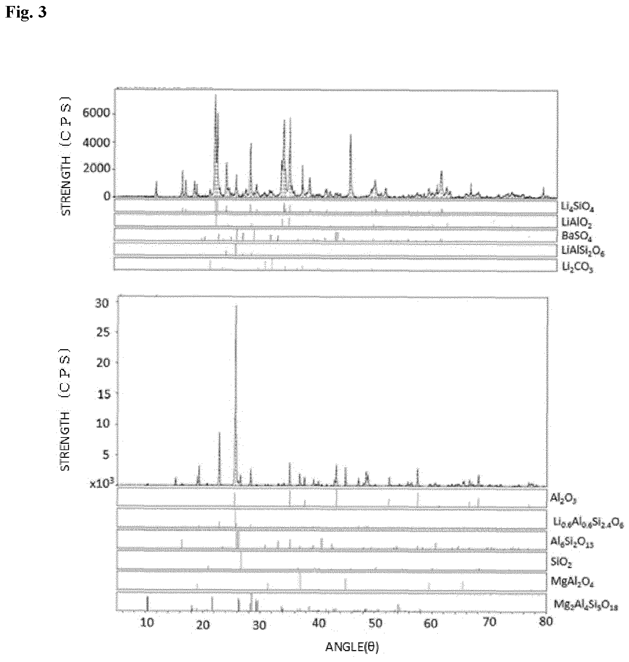

FIG. 3 shows results of XRD analysis of constituent minerals of a waste sagger of the present invention.

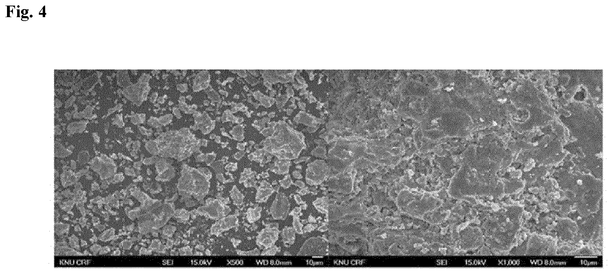

FIG. 4 is a photograph showing the overall particle size distribution and particle surface structure by using a scanning electron microscope (SEM) photograph of a waste sagger crushed material.

### BEST MODE FOR CARRYING OUT THE INVENTION

The present invention relates to a method for producing high-purity lithium phosphate from a waste sagger. Due to the repeated use of a sagger, the sagger is eroded by lithium hydroxide or lithium carbonate, and is destructed. An object of the present invention is to recover lithium carbonate, which is a high value-added lithium compound, with high purity from a waste sagger which is discarded without being recycled. The waste sagger is a ceramic container used in firing a positive electrode active material for a secondary battery, and contains SiO₂, Al₂O₃, and MgO as main components. Table 1 shows the composition of a waste sagger used in sintering NCA (sample name: SG1) and NCM (sample name: SG2), which are positive electrode materials.

**[Table 1]**

| Composition | SG1 (NCA) | SG2 (NCM) |
|---|---|---|
| Li₂O (as Li) | 4.52 (2.1)% | 1.89 (0.88)% |
| NiO | 0.13% | 0.16% |
| Co₃O₄ | 0.01% | 0.02% |
| SiO₂ | 49.38% | 30.73% |
| Al₂O₃ | 38.25% | 51.38% |
| CaO | 0.48% | 0.52% |
| MgO | 5.37% | 13.63% |
| Fe₂O₃ | 0.33% | 0.54% |
| Na₂O | 0.32% | 0.12% |
| K₂O | 0.30% | 0.19% |
| etc. | 0.91% | 0.82% |

As a result of the analysis, SG1 and SG2 are confirmed to have a high lithium (Li) content of 2.1% and 0.88%, respectively, and when the lithium content is converted into a lithium carbonate content, the lithium carbonate content corresponds to SG1 = 11.17% and SG2 = 4.68%. In addition, the contents of nickel and cobalt are confirmed to be 0.13% to 0.16% and 0.01% to 0.02%, respectively, which is confirmed to be sufficient for recovery.

The waste sagger is composed of mullite, cordierite, alumina, quartz, magnesium aluminate, lithium silicate, lithium aluminum oxide, lithium aluminum silicate, and the like. Among the constituent components of the waste sagger, materials that cause the destruction of the waster sagger are lithium silicate, lithium aluminum oxide, lithium aluminum silicate, and the like.

The present invention provides a method for producing high-purity lithium phosphate from a waste sagger, the method including a first step of crushing a waste sagger to produce a waste sagger crushed material, a second step of adding an alkali leaching agent and water to the waste sagger crushed material and then allowing a reaction to occur therebetween to prepare a waste sagger crushed material dissolution reaction slurry, a third step of performing primary solid-liquid separation on the waste sagger crushed material dissolution reaction slurry, a fourth step of allowing a filtrate obtained in a liquid phase through the primary solid-liquid separation to flow through an anion exchange resin to perform an anion exchange reaction, a fifth step of performing a carbonation reaction on a flow-through of the anion exchange reaction to prepare a carbonation reaction liquid, a sixth step of performing secondary solid-liquid separation on the carbonation reaction liquid, a seventh step of performing reverse osmosis concentration on a filtrate obtained in a liquid phase through the secondary solid-liquid separation, an eighth step of performing a heating fractional precipitation reaction on a concentration liquid obtained through the reverse osmosis concentration, a ninth step of performing tertiary solid-liquid separation on a reaction liquid of the heating fractional precipitation reaction, a tenth step of performing a lithium phosphate precipitation reaction on a filtrate obtained in a liquid phase through the tertiary solid-liquid separation, and an eleventh step of performing quaternary solid-liquid separation on a reaction liquid of the lithium phosphate precipitation reaction to obtain high-purity lithium phosphate in a solid phase.

The waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes, and the anion exchange resin is an anion exchange resin prepared by allowing trimethyl ammonium or dimethyl ethanolamine to be adsorbed onto a styrene-based resin having a gel structure, wherein the anion exchange reaction is performed by allowing the filtrate obtained in a liquid phase through the primary solid-liquid separation to flow through an anion exchange tower filled with the anion exchange resin at a flow rate of 0.1 m/sec to 1 m/sec.

The carbonation reaction is performed by introducing the flow-through of the anion exchange reaction into a pressure reaction vessel (or a sealed container), injecting one selected from among carbon dioxide, carbonated water, and a lithium hydrogen carbonate aqueous solution to the flow-through to allow a reaction to occur therebetween until the pH reaches 7, and then letting the mixture to stay at a temperature of 80 °C to 100 °C for 20 minutes or more to complete the reaction, and the reverse osmosis concentration uses a batch-type reverse osmosis facility, and the upper limit of the working pressure of a pump is set to 20 kg/cm², and the filtrate obtained in a liquid phase through the secondary solid-liquid separation is concentrated until the concentration of lithium therein reaches 10,000 mg/ℓ to 20,000 mg/ℓ.

The heating fractional precipitation reaction is performed by heating the concentration liquid obtained through the reverse osmosis concentration to 80 °C to 100 °C for 20 minutes or more to precipitate lithium carbonate, and the lithium phosphate precipitation reaction is performed by introducing, to the filtrate obtained in a liquid phase through the tertiary solid-liquid separation, an soluble phosphate aqueous solution corresponding to an equivalent of 1 time to 1.1 times the equivalent of lithium ions dissolved in the filtrate, adjusting the pH to 12 or higher, and then allowing the mixture to stay at 80 °C to 100 °C for 20 minutes or longer to precipitate lithium phosphate.

The lithium phosphate produced by the production method of the present invention has a purity of 99.9% or greater.

### MODE FOR CARRYING OUT THE INVENTION

Hereinafter, the method for producing high-purity lithium phosphate from a waste sagger of the present invention will be described in detail for each process.

### (1) First process: Waste sagger crushing process

A waste sagger is crushed into powder of 200# or less. There is a problem in that the crushing efficiency is too low to pulverize the waste sagger at once. Therefore, it is preferable that the waste sagger is coarsely crushed to 1 mm or less through primary crushing using a jaw crusher, and then crushed to 200# (mesh) or less through secondary crushing using a ball mill. The waste sagger has a high compressive strength and is vulnerable to impact. An impact-type crusher may be applied to the crushing of the waste sagger, but crushed particles having sharp surfaces with high hardness are generated, resulting in increasing the wear of parts of the crusher, thereby increasing the costs. Therefore, in the present invention, a jaw crusher with easy replacement of parts and low cost is used in the primary crushing process, and a ball mill is used in the secondary crushing process. Preferably, in order to improve the crushing efficiency, a medium crusher such as an impact crusher may be arranged before the secondary crushing process.

### (2) Second process: Waste sagger crushed material dissolution process

The waste sagger crushed material pulverized through the first process includes a lithium-containing material such as lithium hydroxide, lithium carbonate, lithium silicate, lithium aluminum oxide, or lithium aluminum silicate. Most of the lithium-containing materials are water-soluble, but some of the lithium-containing materials which contain lithium aluminum silicate have low solubility with respect to water, and thus, have a problem of being difficult to be dissolved only with water. In order to solve the above-described problem, in the present invention, a waste sagger crushed material dissolution process is applied in which the waste sagger crushed material is mixed with an alkali leaching agent including one or a mixture of two or more selected from the group consisting of a hydroxide of an alkali metal, a carbonate of an alkali metal, or a hydroxide of an alkali earth metal, and water, and then the mixture is heated. Since the alkali leaching agent is heated and dissolved together, lithium aluminum silicate or the like having low solubility with respect to water may also be decomposed and dissolved, so that the waste sagger crushed material dissolution process of the present invention has an advantage of increasing the recovery rate of lithium. Decomposition and dissolution reactions of the lithium-containing material having low solubility tend to increase in reactivity in proportion to the concentration of an alkali and the temperature. If an alkali leaching agent containing an alkali metal salt is used to this end, the concentration of silicon and aluminum increases, which requires a separate process to remove the same. In contrast, if a leaching agent made of an oxide or hydroxide of an alkali earth metal and water is used, soluble silicon or aluminum and a poorly soluble salt are formed, which promote the decomposition of lithium aluminum silicate and at the same time, help to maintain the concentration of the silicon and the aluminum in a solution low, and which react with lithium carbonate having relatively low solubility to produce lithium hydroxide with high solubility and poorly soluble carbonate, so that there is an advantage of improving the leaching rate of lithium. Therefore, in the waste sagger crushed material dissolution process of the present invention, calcium hydroxide, calcium oxide, or magnesium hydroxide is used as a leaching agent to promote the extraction of lithium, and the amount thereof added is suitably 5 parts by weight to 50 parts by weight based on 100 weight parts of the waste sagger. It has been confirmed that the waste sagger crushed material dissolution process requires 6 hours or more to complete the reaction at a temperature of 20 °C or lower, and the reaction is completed within 2 hours at 50 °C, and the reaction is completed within 30 minutes at 80 °C. In addition, the reaction is completed within 10 minutes around 100 °C, but there is a problem in that the loss of energy due to the evaporation of water is significant. Therefore, the waste sagger crushed material dissolution process of the present invention is preferably performed for 30 minutes to 120 minutes at 50 °C to 80 °C.

In summary, the preferred waste sagger crushed material dissolution process of the present invention is to heat the waste sagger crushed material slurry containing calcium hydroxide, calcium oxide, or magnesium hydroxide, which is a leaching agent, in an amount of 5 parts by weight to 50 parts by weight based on 100 parts by weight of the waste sagger crushed material crushed to 200# (mesh) or less to a temperature of 50 °C to 80 °C to be reacted for 30 minutes to 120 minutes. For reference, if a hydroxide (or oxide) of an alkali earth metal and a hydroxide of an alkali metal corresponding to 5 % to 50% of the amount of the hydroxide (or oxide) of an alkali earth metal used are further introduced under the same conditions, there is an effect of increasing the leaching speed and leaching rate of lithium by about 5%.. The above-described method may be a preferred method if an increase in process costs can be tolerated.

### (3) Third process: Primary solid-liquid separation process

A dissolution reaction liquid of the waste sagger crushed material is subjected to solid-liquid separation (primary solid-liquid separation). The primary solid-liquid separation process may be performed using a sedimentation tank, a filter press, a screw filter, a centrifuge, or the like, or a combination of two or more thereof to increase the efficiency. A solid phase obtained by the primary solid-liquid separation contains a positive electrode active material and a refractory material composition, and a liquid phase (filtrate) contains lithium (Li⁺), aluminum (Al(OH)₄⁻), and silicon (H₂SiO₄²⁻). The filtrate is introduced to an anion exchange process and a carbonation process to be used in producing high-purity lithium carbonate, and the solid phase is introduced to a multi-stage magnetic separation process, a lithium leaching process, and a carbonation reaction process to recover lithium contained thereinside as lithium carbonate, wherein the recovered lithium carbonate is introduced to a pressurized carbonic acid dissolution process performed after the anion exchange process and the carbonation process of the filtrate to be produced as high-purity lithium carbonate. Hereinafter, the process of producing high-purity lithium carbonate by using a filtrate will be described first, and then the process of producing high-purity lithium carbonate by using a solid phase will be described.

### (4) Fourth process: Anion exchange process

The filtrate obtained in the primary solid-liquid separation process is a strongly alkaline lithium hydroxide aqueous solution with a pH of 12 or higher. The lithium hydroxide aqueous solution contains impurities such as Al(OH)₄⁻, H₂SiO₄²⁻, and Ca²⁺ together with lithium hydroxide. In the present invention, in order to remove the impurities, an anion exchange process of passing through an anion exchange resin is performed. The anion exchange resin may be a resin usable in a strong base region, and preferably a resin including an OH⁻ functional group by adsorbing trimethyl ammonium or dimethyl ethanolamine onto a styrene-based resin having a gel structure. The anion exchange process may be performed in an ion exchange tower in which the height of the anion exchange resin layer is 80 cm or higher, and performed by flowing the lithium hydroxide aqueous solution at a flow rate of 0.1 m/sec to 1 m/sec under a room temperature condition. The ion exchange tower is preferably a continuous ion exchange tower designed to be in contact with a processing solution in a countercurrent manner and to regenerate and introduce a resin used for a predetermined period of time. When the filtrate (lithium hydroxide aqueous solution) obtained from the primary solid-liquid separation process is injected into the ion exchange tower, the impurities are combined with the anion exchange resin and remain, and the lithium hydroxide aqueous solution is obtained as a flow-through, thereby improving the purity.

The anion exchange resin used for a predetermined period of time is regenerated by desorption of absorbed anions, and a backwash solution generated at this time is sent to the second process, the waste sagger crushed material dissolution process, and reused, and the regenerated anion exchange resin is sent to the anion exchange tower and reused. At this time, water and slaked lime may be further added to the backwash solution and introduced to the waste sagger crushed material dissolution process.

In addition, the anion exchange process may be performed by further including a filtrate of a septenary solid-liquid separation process performed after a lithium leaching process in a process of producing lithium carbonate or a process of producing lithium sulfate.

### (5) Fifth process: Primary carbonation reaction process

The flow-through which has passed through the ion exchange tower is a lithium hydroxide aqueous solution from which the impurities are removed. In the present invention, a primary carbonization reaction process is performed to obtain lithium carbonate (Li₂CO₃) from the lithium hydroxide. To the primary carbonation reaction process, a first carbonation method (refer to Formula 1) performed by injecting a carbon dioxide (CO₂) gas into a lithium hydroxide aqueous solution, a second carbonation method (see Formula 2) performed by mixing a lithium hydroxide aqueous solution with carbonated water, a third carbonation method (see Formula 3) performed by mixing a lithium hydroxide aqueous solution with a lithium hydrogen carbonate aqueous solution, a fourth carbonation method (see Formula 4) performed by mixing a lithium hydroxide aqueous solution with a sodium carbonate aqueous solution, or a fifth carbonation method (see Formula 5) performed by mixing a lithium hydroxide aqueous solution with a potassium carbonate aqueous solution may be applied.

[Formula 1] 2LiOH + CO₂ → Li₂CO₃ + H₂O

[Formula 2] 2LiOH + H₂CO₃ → Li₂CO₃ + 2H₂O

[Formula 3] LiOH + LiHCO₃ → Li₂CO₃ + H₂O

[Formula 4] 2LiOH + Na2CO₃ → Li₂CO₃ + 2NaOH

[Formula 5] 2LiOH + K₂CO₃ → Li₂CO₃ + 2KOH

Among the above-described carbonation methods, the fourth carbonation method and the fifth carbonation method have a risk of generating impurities such as sodium and potassium, respectively, and thus, have a problem in that the impurities are required to be removed through an additional process. Therefore, in the present invention, the first carbonation method, the second carbonation method, or the third carbonation method, which do not have the risk of generating impurities, are used, and preferably, the first carbonation method of injecting a carbon dioxide gas is used.

According to the embodiment of the present invention, the first carbonation method is performed by introducing 1 liter of a lithium hydroxide aqueous solution concentrated to a concentration of 2 mol/ℓ into a pressure reaction tank with a capacity of 1.5 liters, blowing the carbon dioxide gas at a flow rate of 1 ℓ/min, and stirring the mixture, wherein a lithium carbonate generation reaction is completed in about 22 minutes. In this reaction, the concentration of the lithium hydroxide aqueous solution is suitably 0.5 mol/ℓ to 5 mol/ℓ. If the concentration of the lithium hydroxide aqueous solution is lower than 0.5 mol/ℓ, the amount of lithium carbonate produced is too small, thereby degrading the process efficiency, and if the concentration thereof is higher than 5 mol/ℓ, the viscosity of the aqueous solution is too high, thereby preventing the impurities from being removed. The first carbonation method of the present invention is an exothermic reaction, and if a 20 °C aqueous solution is subjected to the reaction, the temperature at the end of the reaction is about 35 °C. Therefore, there is no need for a separate heating operation during the reaction period, but as the temperature increases, the solubility of lithium carbonate decreases, which not only improves the yield of the lithium carbonate, but also accelerates the crystal growth rate, resulting in an effect of increasing the purity by recrystallization, so that it is preferable that the reaction is performed to allow the temperature of a final reaction liquid to be 80 °C to 100 °C.

A carbonation reaction liquid of the present invention is in a strongly alkaline state with a pH of 12 or higher at the beginning of the reaction, and as the reaction progresses, the pH gradually decreases and converges to a pH of 7. The production of lithium carbonate is completed around a pH of 9, and in a pH state lower than pH 9, the lithium carbonate is redissolved into lithium bicarbonate. Therefore, it is preferable that the carbonation reaction is completed when the pH is between 8 and 10. However, even if the reaction proceeds until the pH of the reaction liquid reaches 7, the produced lithium bicarbonate is recovered in the subsequent process, so that the yield is not degraded, and there is rather an advantage of minimizing membrane damage in the subsequent reverse osmosis concentration process, so that it is more preferable to perform the reaction until the pH of the reaction liquid reaches 7.

In summary, the primary carbonation reaction process of the present invention is performed by introducing a lithium hydroxide aqueous solution having a concentration of 0.5 mol/ℓ to 5 mol/ℓ into a pressure reaction vessel (or a sealed container), injecting a carbon dioxide gas thereto to allow a reaction to occur therebetween until the pH reaches 7, and then heating a reaction liquid until the temperature thereof reaches 80 °C to 100 °C, and then letting the mixture to stay at the above temperature for 20 minutes or more to complete the carbonation reaction.

The second carbonation method of the present invention may use carbonated water prepared by injecting a carbon dioxide gas at a pressure of 5 bar to 20 bar at a temperature of 5 °C to 10 °C or lower, and preferably, uses carbonated water prepared by injecting a carbon dioxide gas at a pressure of 10 bar and at a temperature of 5 °C or lower. The carbonated water prepared by injecting a carbon dioxide gas at a pressure of 10 bar and at a temperature of 5°C or lower contains about 0.68 mol of carbon dioxide.

According to the embodiment of the present invention, if 1 ℓ of the carbonated water and 500 mℓ of a 2.72 mol lithium hydroxide aqueous solution are mixed, reacted at 20 °C for 30 minutes, heated to 100 °C, aged for 10 minutes, and then filtered, it is possible to obtain about 39 g of high-purity lithium carbonate. In this reaction, it is also preferable that when the above-described reaction is completed, the pH of the aqueous solution is about 7.

The third carbonation method of the present invention is a method of using a lithium hydrogen carbonate (LiHCO₃) aqueous solution, and a lithium hydrogen carbonate aqueous solution prepared by reacting lithium carbonate and carbonated water, or a lithium hydrogen carbonate aqueous solution prepared by reacting lithium carbonate and carbon dioxide in a pressure vessel may be used. It is preferable that the lithium hydrogen carbonate aqueous solution prepared by reacting lithium carbonate and carbon dioxide in a pressure vessel is used as the lithium hydrogen carbonate aqueous solution, and the reason is that if the lithium carbonate and the carbon dioxide are reacted in the pressure vessel, the concentration of lithium bicarbonate in the aqueous solution may be rapidly increased.

### (6) Sixth process: Secondary solid-liquid separation process

Solid-liquid separation is performed on the carbonation reaction liquid to obtain lithium carbonate in a solid phase and a filtrate in a liquid phase. The filtrate contains about 1,500 mg/ℓ to 2,000 mg/ℓ of lithium ions, and is introduced to a lithium phosphate production process to be prepared as high-purity lithium phosphate.

### (7) Seventh process: Primary reverse osmosis concentration process

The filtrate obtained in the secondary solid-liquid separation process has a pH of 6 to 8 and contains 1,500 mg/ℓ to 2,000 mg/ℓ of lithium in a lithium bicarbonate state. In the present invention, a lithium bicarbonate aqueous solution is concentrated using a reverse osmosis membrane with respect to the filtrate.

If a reverse osmosis filter is used in the reverse osmosis concentration process, in a large-scale desalination process, it is advantageous to use a multi-stage countercurrent-type reverse osmosis facility with high initial facility cost but low energy cost. However, as in the present invention, at a facility with a daily throughput of less than 1,000 tons, it is preferable to use a batch-type reverse osmosis facility in which a processing solution is continuously passed through a filter until a predetermined concentration is reached. If the batch-type reverse osmosis facility is used, in order to perform concentration until the lithium concentration reaches 20,000 mg/ℓ, a water level control sensor may be used, or the upper limit of the working pressure of a pump may be set to 20 kg/cm².

The final concentration of the concentrated lithium bicarbonate aqueous solution prepared through the above-described reverse osmosis concentration process may be 10,000 mg/ℓ to 20,000 mg/ℓ. If the concentration is performed such that the concentration of the concentrated lithium bicarbonate aqueous solution is lower than 10,000 mg/ℓ, there is a disadvantage in that the amount of energy consumption is relatively large compared to the amount of lithium carbonate obtained in a subsequent process of a heating fractional precipitation process, and if the concentration is performed such that the concentration of the concentrated lithium bicarbonate aqueous solution is higher than 20,000 mg/ℓ, there is a problem in that lithium carbonate is generated and deposited on the surface of the reverse osmosis membrane, thereby causing damage to the membrane.

Additionally, the primary reverse osmosis concentration process may be performed by further adding a filtrate obtained in a liquid phase in a senary solid-liquid separation process after a pressurized carbonic acid dissolution process, a quinary solid-liquid separation process, and a secondary heating fractional precipitation process in the process of producing high-purity lithium carbonate from a solid phase separated in the secondary solid-liquid separation after the anion exchange process.

### (8) Eighth process: Primary heating fractional precipitation process

The lithium bicarbonate aqueous solution, which is a concentration liquid of the primary reverse osmosis concentration process, is heated to precipitate only the lithium carbonate. The precipitation process is represented by Formula 6.

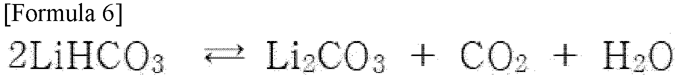

If the reaction temperature is low and the pressure is increased, a lithium carbonate dissolution reaction proceeds to produce lithium bicarbonate, and if the reaction temperature is high and the pressure is decreased, lithium bicarbonate is precipitated as lithium carbonate. The above-described reaction has a disadvantage in that lithium carbonate is precipitated with only simple intense stirring or aeration, but the speed of the precipitation is very slow. Therefore, the most economical and easiest way to precipitate lithium bicarbonate as lithium carbonate in the above-described reaction is to heat a reaction liquid to 80 °C to 100°C while stirring the same. The precipitation reaction rate of lithium carbonate varies depending on temperature and pressure, and the higher the temperature and the lower the pressure, the higher the rate. According to the embodiment, if an aqueous solution having a concentration of 2 mol/ℓ of lithium carbonate (LiHCO₃) is heated to 100 °C, the precipitation reaction of lithium carbonate is completed within 20 minutes.

### (9) Ninth process: Tertiary solid-liquid separation process

Solid-liquid separation is performed on a precipitation reaction liquid of the primary heating fractional precipitation process. A solid phase obtained through the above-described solid-liquid separation includes trace amounts of aluminum and silicon, which are impurities, together with a lithium carbonate compound. The solid phase is introduced to a pressurized carbonic acid dissolution process for producing high-purity lithium carbonate. A liquid phase obtained through the above-described solid-liquid separation contains lithium, sodium, and potassium at a concentration of hundreds to thousands of mg/ℓ. The liquid phase is introduced into a lithium phosphate precipitation process for producing high-purity lithium phosphate.

### (10) Tenth process: Lithium phosphate leaching process

When sodium phosphate is added to a filtrate obtained from the tertiary solid-liquid separation process, lithium ions contained in the filtrate are precipitated as lithium phosphate and recovered. To this end, a lithium aqueous solution, which is the filtrate obtained from the tertiary solid-liquid separation, and a soluble phosphate aqueous solution corresponding to an equivalent of 1 time to 1.1 times the equivalent required to precipitate all of lithium dissolved in the aqueous solution as lithium phosphate are introduced into a reaction tank, and an alkali is introduced thereto such that the pH of the aqueous solution is to be 12 or higher, and then a reaction liquid is allowed to stay at 80 °C to 100 °C for 20 minutes or longer to complete the precipitation reaction of lithium phosphate. The lithium phosphate precipitation process may be performed by further including a filtrate having impurities of greater than 5,000 mg/ℓ, which is a filtrate of an octonary solid-liquid separation process for preparing lithium carbonate, and may be performed by further including a filtrate having impurities of greater than 5,000 mg/ℓ, which is a filtrate of a nonary solid-liquid separation process for preparing high-purity lithium sulfate.

### (11) Eleventh process: Quaternary solid-liquid separation process

A lithium phosphate precipitation material produced by the lithium phosphate precipitation process may be obtained in a solid phase through a quaternary solid-liquid separation process, and the lithium phosphate is produced as high-purity lithium phosphate having a purity of 99.9% or greater through post-processing such as drying. The liquid phase obtained through the solid-liquid separation is brought into contact with slaked lime to remove phosphoric acid, and then is discharged.

The specific embodiments described in this specification are representative of preferred embodiments or examples of the present invention, and the scope of the present invention is not limited thereby. It will be apparent to those skilled in the art that modifications and other uses of the present invention do not depart from the scope of the invention described in the claims of this specification.

### INDUSTRIAL APPLICABILITY

When the method for producing high-purity lithium phosphate from a waste sagger of the present invention is used, it is expected not only to be able to produce high-purity lithium phosphate that can be used for manufacturing lithium secondary batteries by recycling a discarded waste sagger, but also to be able to recycle a positive electrode active material, iron oxide, alumina, silicate, and calcium carbonate obtained as by-products during the production process of the lithium phosphate.

## Claims

1. A method for producing high-purity lithium phosphate from a waste sagger, the method comprising:
a first step of crushing a waste sagger to produce a waste sagger crushed material;
a second step of adding an alkali leaching agent and water to the waste sagger crushed material and then allowing a reaction to occur therebetween to prepare a waste sagger crushed material dissolution reaction slurry;
a third step of performing primary solid-liquid separation on the waste sagger crushed material dissolution reaction slurry;
a fourth step of allowing a filtrate obtained in a liquid phase through the primary solid-liquid separation to flow through an anion exchange resin to perform an anion exchange reaction;
a fifth step of performing a carbonation reaction on a flow-through of the anion exchange reaction to prepare a carbonation reaction liquid;
a sixth step of performing secondary solid-liquid separation on the carbonation reaction liquid;
a seventh step of performing reverse osmosis concentration on a filtrate obtained in a liquid phase through the secondary solid-liquid separation;
an eighth step of performing a heating fractional precipitation reaction on a concentration liquid obtained through the reverse osmosis concentration;
a ninth step of performing tertiary solid-liquid separation on a reaction liquid of the heating fractional precipitation reaction;
a tenth step of performing a lithium phosphate precipitation reaction on a filtrate obtained in a liquid phase through the tertiary solid-liquid separation; and
an eleventh step of performing quaternary solid-liquid separation on a reaction liquid of the lithium phosphate precipitation reaction to obtain high-purity lithium phosphate in a solid phase.

2. The method of claim 1, wherein the waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes.

3. The method of claim 1, wherein the anion exchange resin is an anion exchange resin prepared by allowing trimethyl ammonium or dimethyl ethanolamine to be adsorbed onto a styrene-based resin having a gel structure, wherein the anion exchange reaction is performed by allowing the filtrate obtained in a liquid phase through the primary solid-liquid separation to flow through an anion exchange tower filled with the anion exchange resin at a flow rate of 0.1 m/sec to 1 m/sec.

4. The method of claim 1, wherein the carbonation reaction is performed by introducing the flow-through of the anion exchange reaction into a pressure reaction vessel (or a sealed container), injecting one selected from among carbon dioxide, carbonated water, and a lithium hydrogen carbonate aqueous solution to the flow-through to allow a reaction to occur therebetween until the pH reaches 7, and then letting the mixture to stay at a temperature of 80 °C to 100 °C for 20 minutes or more to complete the reaction.

5. The method of claim 1, wherein the reverse osmosis concentration uses a batch-type reverse osmosis facility, and the upper limit of the working pressure of a pump is set to 20 kg/cm², and the filtrate obtained in a liquid phase through the secondary solid-liquid separation is concentrated until the concentration of lithium therein reaches 10,000 mg/ℓ to 20,000 mg/ℓ.

6. The method of claim 1, wherein the heating fractional precipitation reaction is performed by heating the concentration liquid obtained through the reverse osmosis concentration to 80 °C to 100 °C for 20 minutes or more to precipitate lithium carbonate.

7. The method of claim 1, wherein the lithium phosphate precipitation reaction is performed by introducing, to the filtrate obtained in a liquid phase through the tertiary solid-liquid separation, an soluble phosphate aqueous solution corresponding to an equivalent of 1 time to 1.1 times the equivalent of lithium ions dissolved in the filtrate, adjusting the pH to 12 or higher, and then allowing the mixture to stay at 80 °C to 100 °C for 20 minutes or longer to precipitate lithium phosphate.

8. The method of claim 1, wherein the high-purity lithium phosphate has a purity of 99.9% or greater.
